(19) **Europäisches Patentamt / European Patent Office / Office européen des brevets**

(11) **EP 2 600 708 B1**

(12) **EUROPEAN PATENT SPECIFICATION**

(45) Date of publication and mention
of the grant of the patent:
**26.10.2016 Bulletin 2016/43**

(51) Int Cl.:
*A01G 9/00* *(2006.01)*     *A01G 9/12* *(2006.01)*
*A01G 31/06* *(2006.01)*    *A01G 1/00* *(2006.01)*
*A01G 9/14* *(2006.01)*     *A01G 9/02* *(2006.01)*
*A01G 31/02* *(2006.01)*    *A01G 31/04* *(2006.01)*

(21) Application number: **10856786.8**

(22) Date of filing: **03.09.2010**

(86) International application number:
**PCT/SG2010/000321**

(87) International publication number:
**WO 2012/030298 (08.03.2012 Gazette 2012/10)**

(54) **ROTATING VERTICAL RACKING SYSTEM AND METHOD FOR GROWING PLANTS**

ROTIERENDES VERTIKALES ABSTICHSYSTEM UND VERFAHREN ZUM KULTIVIEREN VON PFLANZEN

SYSTÈME DE RAYONNAGE VERTICAL ROTATIF ET PROCÉDÉ POUR CULTIVER DES PLANTES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**12.06.2013 Bulletin 2013/24**

(73) Proprietor: **Sky Urban IP Pte Ltd**
**Singapore 339170 (SG)**

(72) Inventor: **NG, Jack**
**Singapore 339170 (SG)**

(74) Representative: **Sharman, Thomas Alexander et al**
**Reddie & Grose LLP**
**16 Theobalds Road**
**London WC1X 8PL (GB)**

(56) References cited:
**WO-A1-2010/046523**    **WO-A1-2010/046523**
**GB-A- 1 160 512**      **GB-A- 1 302 613**
**GB-A- 2 366 981**      **GB-A- 2 366 981**
**US-A- 4 345 160**      **US-A- 4 345 160**

**Description**

**FIELD OF INVENTION**

Embodiments of the present invention provide a rotating vertical racking system and method which allow for the efficient use of space for growing plants pf all types.

**BACKGROUND**

Traditional methods of agriculture usually involve growing plants using large plots of fertile land. Using these methods, large areas of land must be cultivated. For example, various types of vegetables or other agricultural products may be planted in long rows over many hectares of land.

These traditional methods of agriculture have many drawbacks. First, in many parts of the world, large tracts of arable land may not be available due to geography and/or the fact that the land is being put to other uses, e.g. housing, manufacturing, etc. Additionally, the productivity of these cultivated areas is often dependent on the weather. In years having a sufficient mixture of rain and sunlight, the yields provided may be good. In other years when the weather is not as cooperative, yields may be poor or even non-existent. Even with modern fertilizers and irrigation, there is little opportunity to provide large improvements in productivity.

As these methods rely on large tracts of land to produce agricultural products, people who live in large cities and/or countries whose supply of arable land is limited must rely on others to provide them with sufficient food. Such reliance may be undesirable, as it places these people at the mercy of others, both growers and distributors, for their food supply.

Furthermore, traditional agricultural methods are often labour intensive. The work can be very difficult, and the financial rewards highly variable. The younger generation thus views farming as an undesirable career choice.

In commercial agricultural operations, very large machines are employed to reduce the amount of labour required. However, these machines can be very dangerous to use. As these machines are generally diesel powered, they may also produce a large pollution in their operation.

Various solutions to some of these problems have been attempted in both indoor clean rooms and outdoor environments. For example, hydroponics as a farming method is touted to be able to offer higher yields over traditional farming through a somewhat controlled environment, by ensuring that the plants obtain the essential mineral nutrients. Other methods may include the use of multiple shelves of various types of plants grown in a greenhouse type of environment. These methods require large amounts of energy to produce the artificial light necessary for plant growth. These methods may also be very labour and resource intensive. For example, the yields produced from conventional farming techniques may be around 90 tons per hectare per year. The cost to produce these yields can be assigned a general value of 1. Yields from a multiple shelf system may be as much as 240 tons per hectare per year. However, as environmental controls, lighting, etc, are required to implement these methods, the cost may be 50 times the cost associated with conventional fanning.

It would therefore be a great improvement in the art of a system and method could be developed which addresses on or more of the above mentioned problems.

The prior art includes published UK patent application number GB2366981 which discloses a rotary growing device having an assembly adapted to be rotatable in a vertical plane about a horizontal axis a plurality of holding means and an attachment means adapted to attach said plurality of holding means to said assembly. The assembly may be connected internally to an external open frame structure or housing which has a cover means placed thereover. The assembly may comprise two upright wheels which may be joined by a plurality of cross members. The device may have a motor to rotatably drive the assembly.

**SUMMARY**

One aspect of the present invention provides a rotatable vertical racking system (100) for growing plants, the system comprising: a frame (210); a drive mechanism (220) coupled to said frame (210); a plurality of racking trays (260) coupled to said drive mechanism (220), each of said racking trays (260) being capable of supporting at least one plant; and characterised in that: wherein the drive mechanism (220) comprises a water drive wheel (230) configured to be rotated by water from a source of water so as rotate said plurality of racking trays (260); and at least one water outlet (370) is provided for delivering water from the source of water to the at least one plant supportable by each of said racking trays.

In alternate embodiments, the racking trays may be maintained in a substantially horizontal orientation as said racking trays rotate. The drive mechanism may be powered by at least one of water, electricity, and solar power.

In further embodiments, the drive mechanism may further include: a first plurality of sprockets coupled to one side of said frame, said first plurality of sprockets configured to receive and drive a first drive element; a second plurality of sprockets coupled to an opposite side of said frame, said second plurality of sprockets configured to receive and drive a second drive element; and a water drive wheel configured to drive at least one of said sprockets using water power; wherein each of said plurality of racking trays is coupled to said first and second drive elements. The first and second drive elements may include first and second roller chains.

In alternate embodiments, the system may further include: a main water wheel positioned to be powered by flowing water from an external source; an electric generator powered by the turning of said main water wheel; water pump electrically connected to said electric generator, said water pump configured to pump water into an elevated tank. The elevated tank may provide a source of water to drive said water drive wheel and to water said plants. The drive mechanism may be configured to rotate said trays at a desired rate. The system may also include means to automatically water said plants while said plants are rotating.

A further aspect of the present invention provides a method for growing plants, the method comprising the steps of: providing a rotating vertical racking system for growing plants, the system comprising: a frame; a drive mechanism coupled to said frame; and a plurality of racking trays coupled to said drive mechanism, each of said racking trays being capable of supporting at least one plant; and driving said drive mechanism to rotate said plurality of racking trays.

In alternate embodiments, the method may further include a step for automatically watering said plants while said plants are rotating. Power to drive said drive mechanism may be provided by at least one of water, electricity, and solar power.

## BRIEF DESCRIPTION OF THE DRAWINGS

Embodiments of the present invention will be better understood and readily apparent to one of ordinary skill in the art from the following written description, by way of example only, and in conjunction with the drawings, in which:

Figure 1 shows a top plan view of a rotating vertical racking system for growing plants according to one embodiment of the present invention;

Figure 2 shows a front plan view of a rotating vertical racking system for growing plants taken along the "Y" axis as shown in Figure 1;

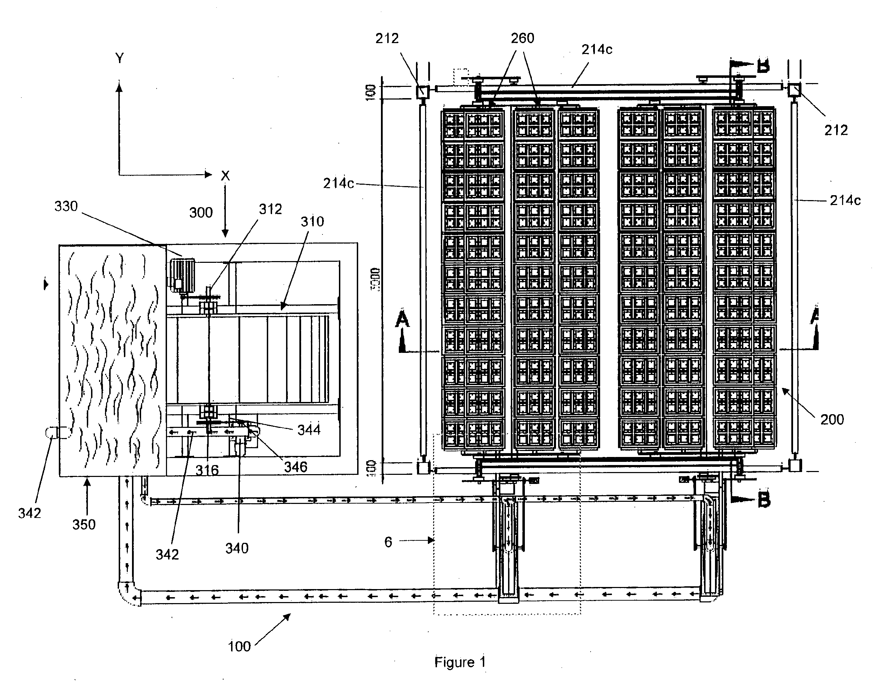

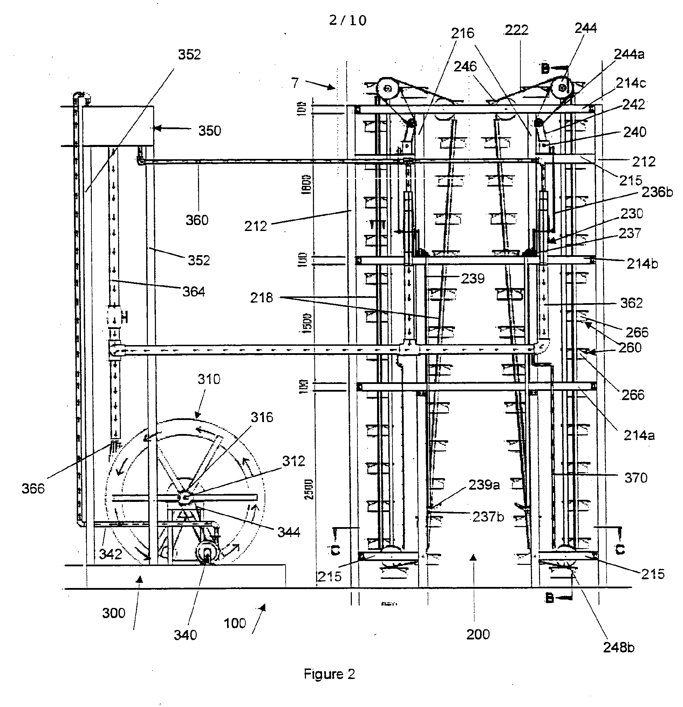

Figure 2 shows a front plan view of a rotating vertical racking system for growing plants taken along the "Y" axis as shown in Figure 1;

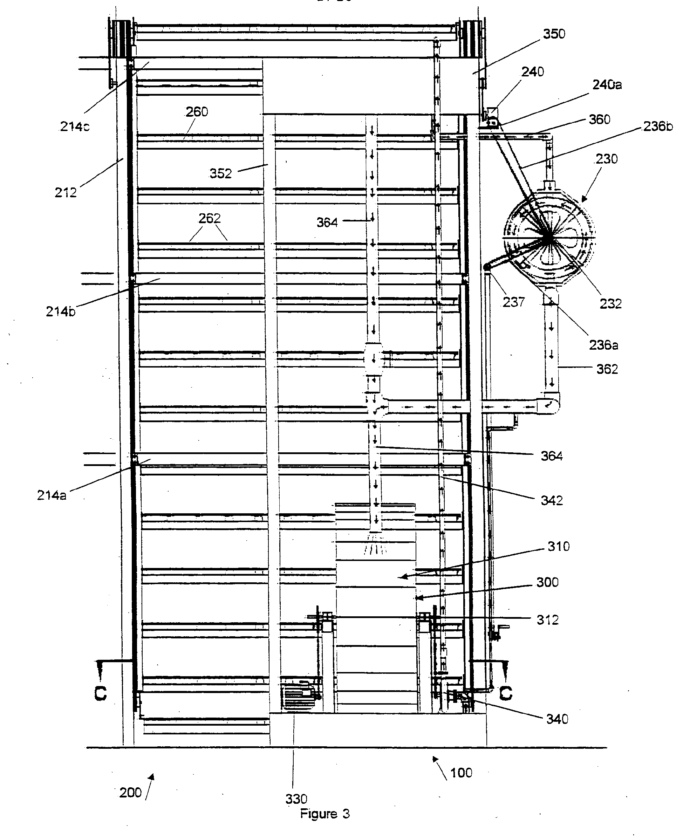

Figure 3 shows a side plan view of a portion of the rotating vertical racking system for growing plants taken along the "X" axis as shown in Figure 1;

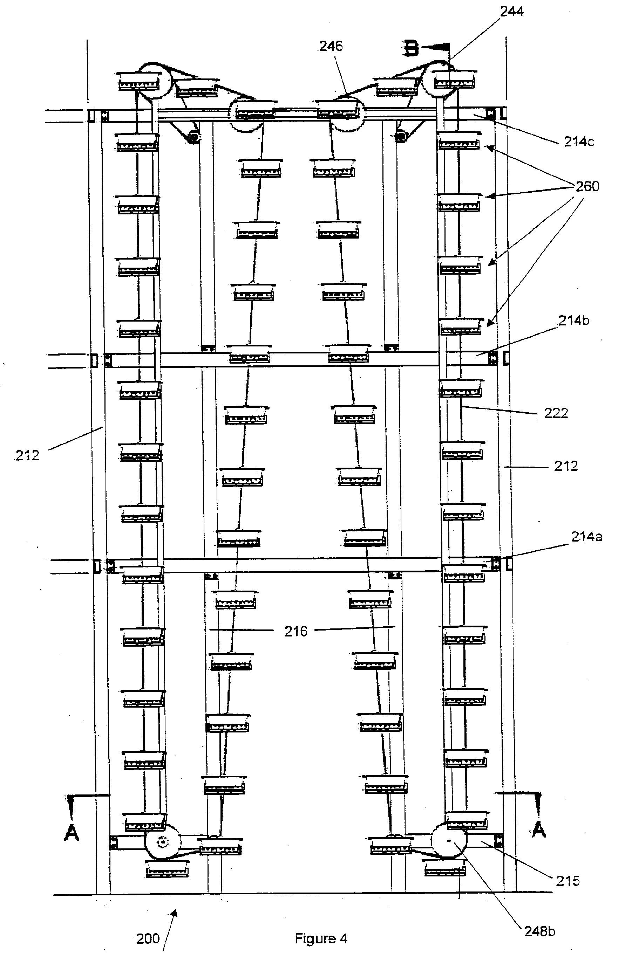

Figure 4 shows a close-up front plan view of a portion of the rotating vertical racking system for growing plants of Figure 2;

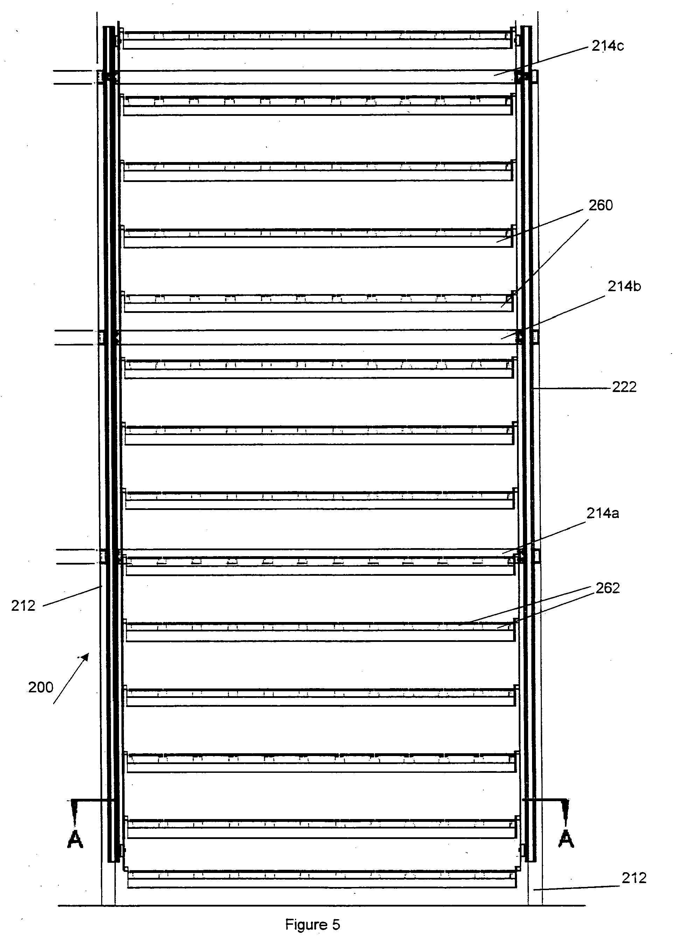

Figure 5 shows a close-up side plan view of a portion of the rotating vertical racking system for growing plants of Figure 3;

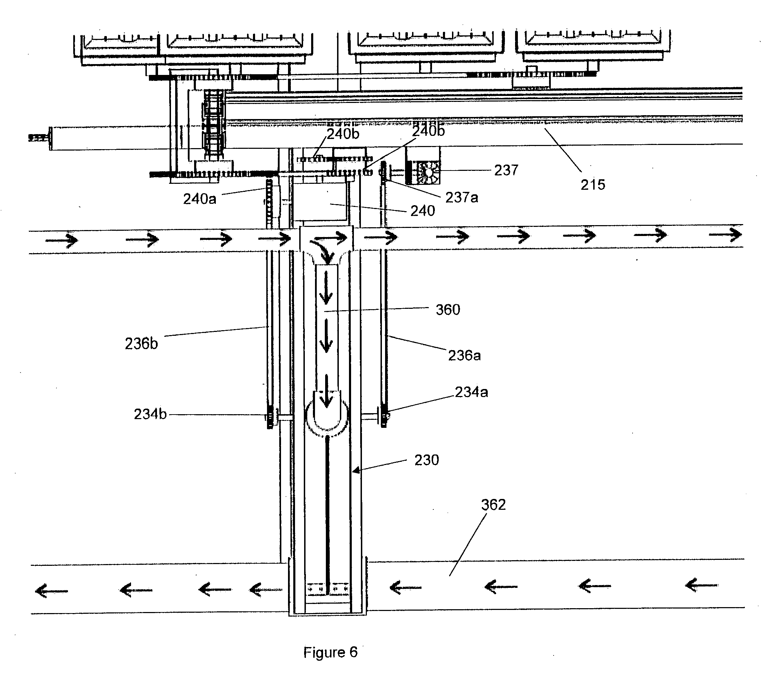

Figure 6 shows a close-up top plan view of a portion shown as dotted line box "6" of the rotating vertical racking system for growing plants as shown in Figure 1;

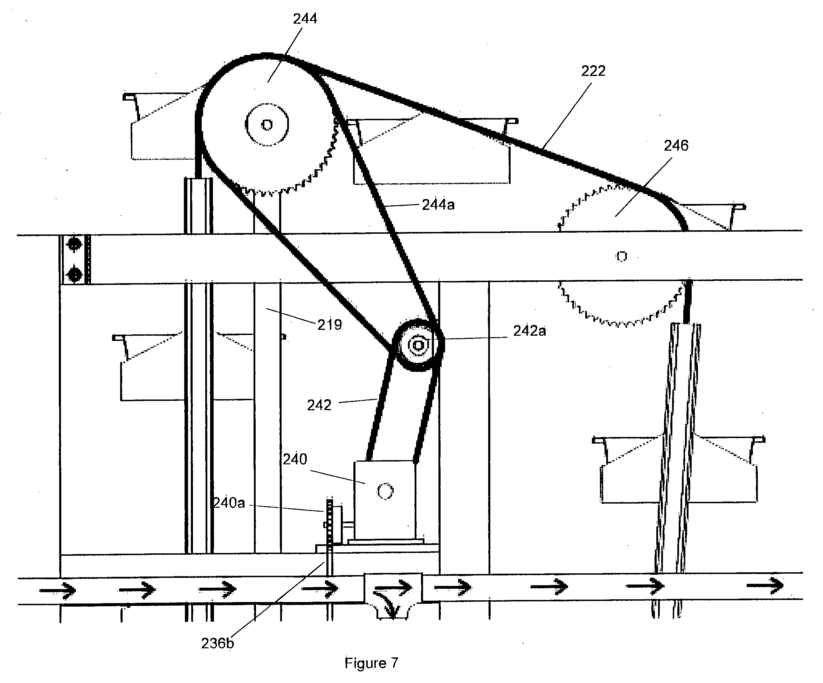

Figure 7 shows a close-up side plan view of a portion shown as dotted line box "7" of the rotating vertical racking system for growing plants as shown in Figure 2;

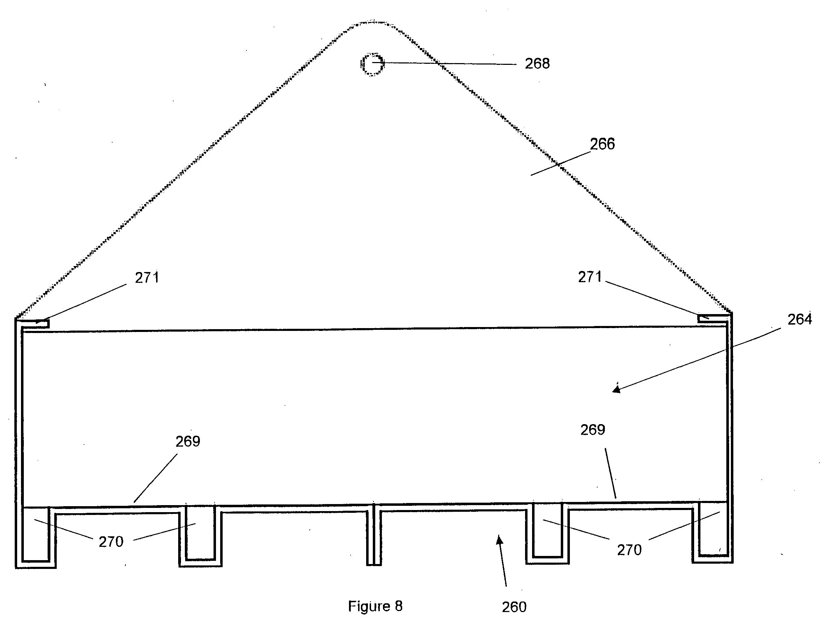

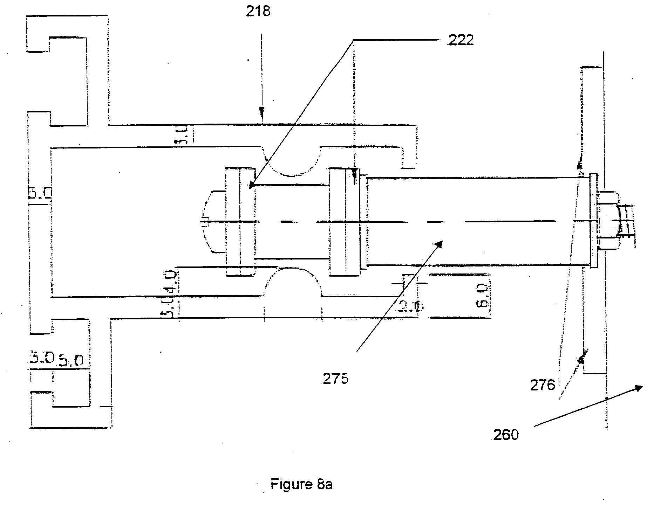

Figure 8 shows a side view of one embodiment of a racking tray which may be used with the system of Figures 1-7;

Figure 8a shows a top view of one end of the racking tray of Figure 8;

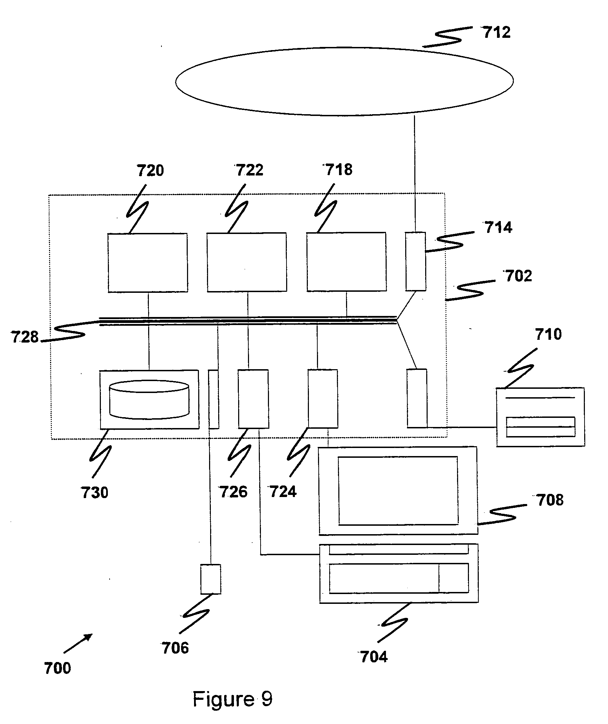

Figure 9 illustrates a schematic view of one embodiment of a computer system that may be used to control the rotating vertical racking system for growing plants shown in Figures 1-8.

## DETAILED DESCRIPTION

Embodiments of the present invention provide a rotating vertical racking system and method which allows for the efficient use of both space and energy resources for growing plants of all types. In a preferred embodiment, the system is completely powered by flowing water from, for example, a river or stream. As will be described in more detail below, the preferred embodiment of the system and method may thus be considered "green" in every respect.

Figure 1 shows a top plan view of a rotating vertical racking system 100 for growing plants according to one embodiment of the present invention. Figure 2 shows a front plan view of the rotating vertical racking system 100 for growing plants taken along the "Y" axis as shown in Figure 1. Figure 3 shows a side plan view of a portion of the rotating vertical racking system 100 for growing plants taken along the "X" axis as shown in Figure 1. Figure 4 shows a close-up front plan view of a portion of the rotating vertical racking system 100 for growing plants of Figure 2. Figure 5 shows a close-up side plan view of a portion of the rotating vertical racking system 100 for growing plants of Figure 3. Figure 6 shows a close-up top plan view of a portion shown as dotted line box "6" of the rotating vertical racking system 100 for growing plants as shown in Figure 1. Figure 7 shows a close-up side plan view of a portion shown as dotted line box "7" of the rotating vertical racking system 100 for growing plants as shown in Figure 2. Figure 8 shows a side view of one embodiment of a racking tray 260 which may be used with the system 100 of Figures 1-7. Figure 8a shows a top view of one end of the racking tray 260 of Figure 8.

With continuing reference to Figures 1-8a, the system 100 includes one or more rack assemblies 200, and one or more water power assemblies 300. The rack assembly 200 includes a support frame 210, one or more drive mechanisms 220, and a plurality of racking trays 260 coupled to the drive mechanism 220. As will be described below in greater detail, each of the plurality of racking trays 260 may be configured to support at least one plant. In the illustrated embodiment of system 100, each rack assembly includes two drive mechanisms 220, each independently supporting a plurality of racking trays 260. However, it is understood that a single drive mechanism 220, or more than two drive mechanisms 220, may be provided in a single rack assembly 200.

While the system 100 is described below as being powered by flowing water from a stream, river, etc., it is understood that the system 100 may also be powered by a wind turbine/pump assembly which provides the water power. Alternately, a solar powered pump may be used. In these embodiments, the system 100 is thus completely self contained. No external energy source is required. In other alternate embodiments, the system 100 may be powered by electricity, or by any combination of water, wind, solar, and electric power.

Support Frame

The support frame 210 may include a plurality of vertical supports 212 and a plurality of horizontal cross-bars 214 coupled to the vertical supports 212. In the embodiment shown, the support frame 210 includes four corner vertical supports 212, and four vertical supports 216. Similarly, in the embodiment shown, the support frame 210 includes four lower horizontal cross-bars 214a, four center horizontal cross-bars 214b, and four upper horizontal cross-bars 214c. Additionally, the support frame includes four drive mechanism horizontal cross-bars 215, and four vertical drive mechanism supports 219 which may be connected to the drive mechanism horizontal cross bars 215 and/or one or more of the horizontal cross-bars 214. The various supports may be joined together using, by way of example and not limitation, various types of mechanical fasteners, brackets, welding, brazing, etc. A chain guide 218 may be connected to one or more of the horizontal cross-bars 214a, 214b, 214c and 215 to provide support to the roller chain 222 and the racking trays.260.

It is understood that various configurations for the support frame 210 may be used depending on the size of the rack assembly 200 and the number of drive mechanisms 220. In the embodiment shown, the support frame 210 is approximately 6.3 meters tall and 3.2 meters square. In this embodiment, the racking trays 260 may be approximately 3m x 0.3m x 0.075m. Each of the racking trays 260 may have one or more compartments 264 configured to receive a plant (See, e.g. Figure 8). In a preferred embodiment, the plants may be contained within polystyrene trays 262. It is understood that other materials may also be used for the individual trays 262. Each of the polystyrene trays 262 may include multiple compartments for holding individual plants. However, as will be discussed in more detail below, depending on the type of plants being grown, space available, etc., the support frame 210, racking trays 260, and polystyrene trays 262 may have any desired dimensions/ configurations both larger and smaller than the embodiment shown.

The support frame 210 may be made from any material capable of supporting the weight of the various components of the rack assembly 200. By way of example and not limitation, the support frame 210 may be made from various metals, hard plastics, composite materials, wood, etc. In a preferred embodiment, the four corner vertical supports 212 and four drive mechanism vertical supports 216 may be made from 100mm X 100mm X 6mm thick steel square hollow sections. The horizontal cross-bars 214a, 214b, 214c and 215 may be made from 100mm X 50mm X 6mm thick steel square hollow sections. While the embodiment of the support frame shown provides for a substantially cubic structure for the support frame 210, it is understood that other shapes may also be used. By way of example and not limitation, the support frame 210 may be in the shape of a parallelogram, a trapezoid, or other shapes and configurations as desired.

Figure 8 shows a side view of one embodiment of a racking tray 260 which may be used with the present system 100. Figure 8a shows a top view of one end of the racking tray 260 of Figure 8. In this embodiment, the racking tray 260 includes a single large compartment 264 which may include a lower plate 269 for receiving a plurality of plant trays 262. The racking tray 260 may be substantially rectangular in shape, although it is understood that other shapes may also be used. The racking tray 260 may have a plate 266 on either of the long rectangular ends. The plate 266 provides a connection for the racking tray 260 to the roller chains 222 via hole 268. As best shown in Figure 8a, a tray support 275 is coupled to each end of each of the racking trays 260 via hole 268. The roller chains 222 may be coupled to each of tray supports 275. A reinforcing plate 276 may be used to provide for sufficient structural stiffness to support the weight of the racking tray 260. In some embodiments, the racking tray 260 may also include one or more support channels 270 below the lower plate 269 to provide for bending stiffness in supporting the weight of the plants. Similarly, the racking tray 260 may include one or more upper flanges 271 to provide additional bending stiffness. It is understood that various numbers, types, and sizes of channels 270, and various configurations of upper flanges 271 may be used. Similarly, the racking tray may be constructed of sufficiently stiff material such that no channels 270 or upper flanges 271 are required.

In a preferred embodiment, the racking tray 260 may be made from aluminium which has been bent to form the general shape of the tray and channels 270. It is understood that other materials, including but not limited to wood, plastics, other types of metals and/or metal alloys, may also be used without departing from the scope of the present embodiments.

**Drive mechanism on the rack assembly**

The following discussion will focus on a single drive mechanism 220 coupled to the support frame 210. However, it is understood that the discussion applies equally to each of the drive mechanisms 220 which may be coupled to the support frame 210. Similarly, the discussion which follows will focus on a water powered drive mechanism 220. However, it is understood that similar structures using electric or other drive means, as known to those of skill in the art, may be adapted to drive the plurality of racking trays 260 given the teachings provided herein.

Figure 7 shows a close-up side plan view of a portion shown as dotted line box "7" of the rotating vertical racking system 100 for growing plants as shown in Figure 2. As best shown in Figures 2-7, the drive mechanism 220 may include a pair of roller chains 222. Each of the racking trays 260 may be coupled to and between the roller chains 222. In the illustrated embodiment, the drive mechanism 220 includes a water drive wheel 230 (Figure 3) that rotates about a hub 232. Details concerning the specific functions of the water drive wheel 230 are provided below.

A pair of single teeth sprockets 234a, 234b is coupled to the hub 232. A chain 236a connects sprocket 234a to a corresponding sprocket 237a attached to a straight bevel gear 237. The straight bevel gear 237 is in turn connected to a long intermediate shaft 239. The intermediate shaft 239 is connected to a lower straight bevel gear 237b. A detachable crank handle 239a connected to the lower straight bevel gear 237b allows for bypass manual control of the water drive wheel 230.

As best shown in Figure 7, a chain 236b connects sprocket 234a to a corresponding sprocket 240a attached to an input of a speed reducer 240. In this embodiment, the speed reducer 240 is attached to the upper drive mechanism horizontal cross-bar 215. The speed reducer 240 includes an output sprocket 240b coupled to a drive chain 242 coupled to a drive sprocket 242a which, in turn, drives a main chain sprocket 244 via a main drive chain 244a which drives the roller chain 222. In this embodiment, the main chain sprocket(s) 244 is/are connected to the vertical drive mechanism support(s) 219. The roller chain 222 is further routed around an upper sprocket 246 and a pair of lower sprockets 248a, 248b (Figure 2). Upper sprocket 246 may be connected to the upper horizontal cross bar 214c. The main chain sprocket 244, upper sprocket 246 and lower sprockets 248a, 248b are configured to provide sufficient separation of the racking trays 260 as the racking trays 260 rotate.

While the discussion above focuses on the various drive components located on one side of the drive mechanism 220 (the main chain sprocket 244, the roller chain 222, the upper sprocket 246 and the pair of lower sprockets 248a, 248b), it is understood that a similar structure may be provided on the opposite side. Together, the various components of the drive mechanism 220 are thus configured to provide the rotational energy required to rotate the racking trays 260. Each of the racking trays 260 are thus connected to a roller chain 222 located at opposite ends of the frame 210. The holes 268 in the end plates 266 of the racking trays 260 may be located a sufficient distance above a center of gravity of the racking trays 260 to provide for stability of the racking trays 260 as they rotate through 360 degrees.

In a preferred embodiment, the various sprockets are made from steel or other suitable materials. The various sprockets may be sized and configured with varying diameters and tooth counts as known to those of skill in the art. However, it is understood that the various components of the drive mechanism 220 may be made from different materials as known to those of skill in the art. Similarly, while the drive elements are illustrated as chains 222, 236a, 236b, 242, and 244a, it is understood that other drive elements including but not limited to for example, pulleys and belts, may also be used depending on the size of the system 100.

**Water power assembly**

As discussed above, the embodiment illustrated may be powered completely by water which flows from an external water source (not shown). In this embodiment, the water power assembly 300 may include a main water wheel 310 which is turned by the external water source, such as a stream, river, etc. The main water wheel 310 is mounted on a hub 312 which allows the main water wheel 310 to freely rotate. In one embodiment, the main water wheel 310 may be configured to drive an electric generator 330 and/or a water pump 340. The electric generator 330 may be used, by way of example and not limitation, to provide lighting for the system 100, to provide power for the computer 700 which may be used to control the system 100.

The water power assembly 300 may also include a storage tank 350 elevated to a position above the water drive wheel(s) 230 to provide a source of water to drive the water drive wheel(s) 230. This will be discussed in more detail below. The storage tank 350 may be mounted on, by way of example and not limitation, a plurality of tank support columns 352. In this embodiment, the storage tank 350 may be filled by the water pump 340 via a water inlet line 342. In alternate embodiments, a commercial water source may be used to drive the main water wheel 310.

In the embodiment shown, the water pump 340 may be powered by a belt or chain 344. The belt/chain 344 is coupled to a sprocket 316 coupled to one end of the hub 312 on the main water wheel 310, and to a pump input sprocket 346 connected to an input hub 348 on the water pump 340. As the main water wheel 310 rotates, the chain 344 rotates the input hub 348 on the water pump 340 to pump water via water inlet line 342 into the tank 350.

The main water wheel 310 may be made from various materials including, but not limited to, various types of wood, plastic, metal composites, etc. In a preferred embodiment, the main water wheel 310 may be made from aluminium or mild steel. In the embodiment shown, the main water wheel has a diameter of approximately 2 meters. However, it is understood that, as discussed above with respect to the frame 210 and drive mechanism 220, the size of the main water wheel 310, and of the other components of the system 100, may be scaled as desired depending on the size of the growing operation.

The tank 350 may have a first outlet pipe 360 configured and routed to provide water to the water drive wheel(s) 230. In a preferred embodiment, once the water has passed through and turned the water drive wheel(s) 230, the water may be collected and routed to a return flow pipe 362. The return flow pipe 362 may be connected to a second outlet pipe 364 extending from the storage tank 350. An outlet 366 of the second outlet pipe 364 may be positioned above the main water wheel 310 to provide additional driving force for the main water wheel 310, thus increasing the efficiency of the system 100.

According to the invention the system 100 also includes a water outlet 370 connected to the return flow pipe 362 to provide water to the plants as they rotate. Alternately, the water outlet may be connected to the first outlet pipe 360. One or more control valves may be used to control the flow of water to the plants, water wheels, and other parts of the system.

**System Operation**

Depending on the dimensions of the system 100, there are various design considerations which may be taken into account in order to provide for the efficient operation of the system 100. By way of example and not limitation, such design considerations may include the type of plant(s) being grown, the spacing between the racking trays 260, the weight of the racking trays 260, the amount of available sunlight in the particular location in which the system 100 is installed, etc. The system 100 is designed to be highly flexible and adaptable to the growing of any sort of plant.

With reference to Figures 1-9 and the discussion above, one example of the operation of the system 100 will now be discussed. For the purposes of illustration, the operation of the system 100 will be described using lettuce as an example plant. However, it is understood that the system 100 may be adapted to grow any type of plant as desired. By way of example and not limitation, the system 100 may be used to grow any type of food, herbs, flowers, etc. Additionally, as discussed above, while the operational discussion will focus on a single drive assembly 220 mounted on a single frame 210, it is understood that the system 100 may be configured using a plurality of frames/drive assemblies as desired. In large scale operations, the system 100 may include hundreds or even thousands of drive assemblies. It is understood that all such scalable systems are deemed to fall within the scope of the appended claims.

In this embodiment, the racking trays 260 may be approximately 3m x 0.3m x 0.075m and be separated by a vertical distance of approximately 0.4 meters. This allows for sufficient space to accommodate the growth of the lettuce prior to harvesting, and also to allow the lettuce to receive sufficient light. Using this configuration, the racking trays 260 may weigh approximately 50 kilograms each. The dimensions of the tower are approximately at 6.3m high by 3.2m wide by 0.95m depth. In this configuration, each support frame 210 may include a total of 28 racking trays driven by each of the drive mechanisms 220. Each of the racking trays 260 may have one or more compartments 264 configured to receive lettuce which may be contained within the polystyrene trays 262. The polystyrene trays may each have multiple compartments 262a for growing lettuce. By way of example and not limitation, each polystyrene tray 262 may include six separate compartments, and each racking tray 260 may include one or more compartments 264 to receive the polystyrene trays 262.

Each racking tray 260 is connected on either end to the roller chains 222 via tray supports 275 (Figure 8a). As water from the first outlet pipe 360 passes over the water drive wheel 230, the water drive wheel turns, thus activating the various chains and belts described above to slowly rotate the racking trays 260. The flow rate of the water may be determined depending on the various design considerations discussed above. For example, assume that we desire the system to provide 3 full rotation cycles per 12 hour period. In order to achieve this goal, we must determine the desired rotational speed of the drive chain 222.

In this embodiment, the drive chain is approximately 12.24 meters in length. In order to provide three complete rotations in each 12 hour period, one rotation must be completed in 4 hours. Thus the speed of the drive chain 222 may be computed using the formula:

$$\text{Velocity} = \text{Chain length (mm)} / \text{time (min)} \tag{1}$$

Using the values for chain length and time provided in Formula 1, in order to ensure one rotation every four hours, the chain 222 must move at 51 mm/minute. In the illustrated system 100, given the various gear ratios and the speed reducer 240, the water wheel 230 turns approximately 24 revolutions per minute in order to move the chain 222 at a rate of 51mm per minute. Depending on the weight and spacing of the racking trays 260, and the desired rotational speed rate, the flow of water driving the water wheel 230 may then be adjusted to provide for this rotational speed (24 revolutions per minute). In this embodiment, the flow is then adjusted to be approximately 19 liters per minute.

In this embodiment, the drive mechanism 220 may be configured to move the racking trays 260 at, by way of example and not limitation, an estimated 1 millimeter per second. For the illustrated embodiment of the system 100, this in turn results in 3 full cycles/rotations of the racking trays 260 in a 12 hour period. This provides all of the racking trays 260 (and the plants contained therein) with adequate opportunities to receive natural sunlight, assuming normal weather conditions. In alternate embodiments, the system 100 may be used indoors, and artificial lighting sources provided. In other alternate embodiment, artificial lighting sources may be provided in outside systems 100 when low light conditions exist for an extended period of time (i.e. in higher latitudes during part of the year).

It is understood that various ranges may be used for the number of rotations of the system 100 in a given period. By way of example and not limitation, the system 100 may be configured to provide for 0.5-20 rotations per 24 hour period. Similarly, the flow rate of the water, the weight and spacing of the racking trays 260, the various dimensions of the system 100, the amount of available sunlight etc. may all be varied as desired by the user.

As discussed above, in this embodiment, a single support frame 210 takes up an estimated land area of 4.5m$^2$ (3m x 1.5m). Yield results for the support frame 210 described in growing lettuce are estimated at 12,000 pieces per annum. Traditional farming techniques, as discussed in the Background section, would provide an estimated yield of only 300 pieces per annum over the same area. Thus, the yield has been increased by a factor of 40! In terms of the systems discussed in the background section, the yields for the preset system may be in the range of 1000-4000 tons per hectare per year. Additionally, as the system 100 is configured to run on water power, the system uses one fifth of the resources required to perform conventional farming. The system 100 is thus 250 times more efficient that the tray system discussed in the background section!

It is understood that the size of the system 100 may be adjusted depending on the type of plant(s) being grown. Thus, the height and width of the support frame 210, the distance between racking trays 260, the number of support frames 210 used in a particular system 100, etc., may all be adjusted as desired. Similarly, the gearing, the size of the water wheels, etc may also be adjusted as desired. In a preferred embodiment, the system 100 may be oriented with the long face oriented in an East/West direction to maximize the amount of sunlight provided to the plants.

In a preferred embodiment, the system 100 may be controlled using a computer. Various algorithms may be implemented to control, by way of example and not limitation, the rotational rate of the racking trays 260, the amount of water provided to the plants being grown, etc. For example, a sensor may be provided in the system 100 to measure the speed of the chain 222. A computer controlled valve may be employed to adjust the water flow rate to the water wheel 230 to provide for a desired chain speed.

Thus, some portions of the description above are explicitly or implicitly presented in terms of algorithms and functional or symbolic representations of operations on data within a computer memory. These algorithmic descriptions and functional or symbolic representations are the means used by those skilled in the data processing arts to convey most effectively the substance of their work to others skilled in the art. An algorithm is here, and generally, conceived to be a self-consistent sequence of steps leading to a desired result. The steps are those requiring physical manipulations of physical quantities, such as electrical, magnetic or optical signals capable of being stored, transferred, combined, compared, and otherwise manipulated.

Unless specifically stated otherwise, and as apparent from the following, it will be appreciated that throughout the present specification, discussions utilizing terms such as "scanning", "calculating", "determining", "replacing", "generating", "initializing", "outputting", or the like, refer to the action and processes of a computer system, or similar electronic device, that manipulates and transforms data represented as physical quantities within the computer system into other data similarly represented as physical quantities within the computer system or other information storage, transmission or display devices.

The present specification also discloses apparatus for performing the operations of the methods. Such apparatus may be specially constructed for the required purposes, or may comprise a general purpose computer or other device selectively activated or reconfigured by a computer program stored in the computer. The algorithms and displays presented herein are not inherently related to any particular computer or other apparatus. Various general purpose machines may be used with programs in accordance with the teachings herein. Alternatively, the construction of more specialized apparatus to perform the required method steps may be appropriate. The structure of a conventional general purpose computer will appear from the description below.

In addition, the present specification also implicitly discloses a computer program, in that it would be apparent to the person skilled in the art that the individual steps of the method described herein may be put into effect by computer code. The computer program is not intended to be limited to any particular programming language and implementation thereof. It will be appreciated that a variety of programming languages and coding thereof may be used to implement the teachings of the disclosure contained herein. Moreover, the computer program is not intended to be limited to any particular control flow. There are many other variants of the computer program, which can use different control flows without departing from the spirit or scope of the invention.

Furthermore, one or more of the steps of the computer program may be performed in parallel rather than sequentially. Such a computer program may be stored on any computer readable medium. The computer readable medium may include storage devices such as magnetic or optical disks, memory chips, or other storage devices suitable for interfacing with a general purpose computer. The computer readable medium may also include a hard-wired medium such as exemplified in the Internet system, or wireless medium such as exemplified in the GSM mobile telephone system. The computer program when loaded and executed on such a general-purpose computer effectively results in an apparatus that implements the steps of the preferred method.

The invention may also be implemented as hardware modules. More particularly, in the hardware sense, a module is a functional hardware unit designed for use with other components or modules. For example, a module may be implemented using discrete electronic components, or it can form a portion of an entire electronic circuit such as an Application Specific Integrated Circuit (ASIC). Numerous other possibilities exist. Those skilled in the art will appreciate that the system can also be implemented as a combination of hardware and software modules.

The method and system of the example embodiment can be implemented on a computer system 700, schematically shown in Figure 9. It may be implemented as software, such as a computer program being executed within the computer system 700, and instructing the computer system 700 to conduct the method of the example embodiment.

The computer system 700 can include a computer module 702, input modules such as a keyboard 704 and mouse 706 and a plurality of output devices such as a display 708, and printer 710.

The computer module 702 can be connected to a computer network 712 via a suitable transceiver device 714, to enable access to e.g. the Internet or other network systems such as Local Area Network (LAN) or Wide Area Network (WAN).

The computer module 702 in the example includes a processor 718, a Random Access Memory (RAM) 720 and a Read Only Memory (ROM) 722. The computer module 702 also includes a number of Input/Output (I/O) interfaces, for example I/O interface 724 to the display 708, and I/O interface 726 to the keyboard 704. The components of the computer module 702 typically communicate via an interconnected bus 728 and in a manner known to the person skilled in the relevant art.

The application program can be supplied to the user of the computer system 700 encoded on a data storage medium such as a CD-ROM or flash memory carrier and read utilizing a corresponding data storage medium drive of a data storage device 730. The application program is read and controlled in its execution by the processor 718. Intermediate storage of program data maybe accomplished using RAM 720.

Embodiments of the present invention as described above provide several advantages over the prior art. The racking trays, stacked in a vertical manner with adequate space in between for growth and reception of light, drastically increases the yield over similar size land using traditional farming methods. The racking trays may be made from, by way of example and not limitation, aluminium, which is recyclable and enhances the main ideology of a green environment framework within the system. In one embodiment, 6063 aluminium may be used. However, it is understood that various types of materials including, but not limited to wood, plastic, composites, metals and metal alloys may be used.

The system is both adaptive and flexible. The height difference between the trays can be adjusted to suit different plants/crops/vegetables. The depth of the racking trays can also be easily customised for other vegetables requiring deeper or wider spacings. The water supply to the plants can also be controlled to ensure optimal growth patterns.

Artificial lighting may be used to offset any unexpected changes in weather, i.e. cloudy or rainy days where natural sunlight is at a premium for the vegetables/plants/crops. Similarly, the size of the frame may be adjusted depending on the specific application. For example, a very large frame (10 meters high or larger) may be used in commercial applications, while a 1 meter frame may be provided in residential balcony settings.

The embodiments of the present invention as described also provide for the incorporation of "green" power in the whole system. By using water to drive the system, no commercial power need be consumed in the production of any desired plants. The system in thus non-polluting, and well as highly efficient in terms of crop yields.

By using the embodiments of the present invention as described herein, the farming environment may be managed and controlled to ensure sufficient lighting, adequate water provision, efficient soil composition, etc. to provide a regular supply of quality vegetables and/or other products. The embodiments introduce a modern factory production concept to the growing of plants, as compared to the traditional method(s) of farm work. The embodiments offer largely improved yields and productivity, and require fewer personnel to manage. The embodiments allow basic subsistence farming to be done almost anywhere as opposed to the age old thinking that it is usually and almost always done in some faraway outskirts of any cities.

The embodiments provide a solution to the urgent problem that the world is running out of farmable land, as the concept relies on considerably less land than traditional farming. The embodiments also serve as a palatable avenue to introduce/encourage our younger generation to get acquainted with nature in these obsessively internet dominant times through structured educational visit programs. Due to the ease of maintenance, the embodiments may be incorporated in homes, buildings, and/or other structures. In these locations, the embodiments may be used to, for example, grow a large variety of flowers and take the by now common notion of a garden city to a whole new level. The embodiments also provide a highly complementary tool for urban renewal, as they promote the "green" message.

It will be appreciated by a person skilled in the art that numerous variations and/or modifications may be made to the preset disclosure as shown in the specific embodiments.

The present invention is limited according to the appended claims.

**Claims**

1. A rotatable vertical racking system (100) for growing plants, the system comprising:

   a frame (210);
   a drive mechanism (220) coupled to said frame (210);
   a plurality of racking trays (260) coupled to said drive mechanism (220), each of said racking trays (260) being capable of supporting at least one plant;
   **characterised in that**: the drive mechanism (220) comprises a water drive wheel (230) configured to be rotated by water from a source of water so as to rotate said plurality of racking trays (260); and
   at least one water outlet (370) is provided for delivering water from the source of water to the at least one plant as they rotate.

2. The system (100) of claim 1, wherein said racking trays (260) are maintained in a substantially horizontal orientation as said racking trays (260) rotate.

3. The system (100) of claim 1 or 2, wherein the drive mechanism (220) further comprises:

   a first plurality of sprockets (244, 246, 248b) coupled to one side of said frame (210), said first plurality of sprockets (244, 246, 248b) configured to receive and drive a first drive element (222);
   a second plurality of sprockets coupled to an opposite side of said frame (210), said second plurality of sprockets configured to receive and drive a second drive element; and
   the water wheel drive (230) configured to drive at least one of said sprockets using water power;
   wherein each of said plurality of racking trays (260) is coupled to said first and second drive elements.

4. The system (100) of claim 3, wherein said first and second drive elements comprise first and second roller chains (222).

5. The system (100) of any of the preceding claims, further comprising:-
   a main water wheel (310) positioned to be powered by flowing water from an external source;
   an electric generator (330) powered by the turning of said main water wheel (310); and a water pump (340) electrically connected to said electric generator, said water pump configured to pump water into an elevated tank (350), the elevated tank (350) operable to provide a source of *water* to water said plants.

6. The system (100) of claim 5, wherein said elevated tank (350) provides a source of water to drive said water drive wheel (230) and to water said plants.

7. The system (100) of any one of the preceding claims, wherein said drive mechanism (220) is configured to rotate said trays (260) at a desired rate.

8. The system (100) of any one of the preceding claims, further comprising means to automatically water said plants while said plants are rotating.

9. The system (100) of any of claims 4 to 8, wherein at least one chain guide (218) may be connected to the frame (210) via one or more supporting cross-bars (214) to provide support to the roller chain (222) and the racking trays (260).

10. The system (100) of any of claims 5 to 9 wherein the elevated tank (350) comprises a first outlet pipe (360) configured and routed to provide water to the water drive wheel (230); and a return flow pipe (362) to collect water once the water has passed through and turned the water drive wheel (230).

11. The system (100) of claim 10, wherein the return flow pipe (362) is connected to a second outlet pipe (364), the second outlet pipe (364) extending from the elevated tank (350) and positioned above the main water wheel (310).

12. The system (100) of any of the preceding claims, wherein the system is remotely operable by a computer (700) to control the rotational rate of the racking trays and the amount of water provided to the plants being grown.

13. A method for growing plants, the method comprising the steps of:

   providing a rotating vertical racking system (100) for growing plants, the system comprising:

      providing a frame (210);
      providing a drive mechanism (220) coupled to said frame (210);
      providing a plurality of racking trays (260) coupled to said drive mechanism (220), each of said racking trays (260) being capable of supporting at least one plant;

   **characterised in that**:

      said drive mechanism (220) comprises a water drive wheel (230) configured to be rotated by water from a source of water so as to rotate said plurality of racking trays (260); and
      providing at least one water outlet (370) for delivering water from the source of water to the at least one plant as they rotate.

14. The method of claim 13 further comprising the steps of:

   providing a main water wheel (310) positioned to be powered by flowing water from an external source;
   providing an electric generator (330) powered by the turning of said main water wheel (310); and
   providing a water pump (340) electrically connected to said electric generator (330) and pumping water into an elevated tank (350) using said water pump (340), the elevated tank (350) operable to provide a source of water to water said plants and wherein said elevated tank (350) provides a source of water to drive said water drive wheel (230) and to water said plants.


**Patentansprüche**

1. Drehbares vertikales Regalsystem (100) zum Züchten von Pflanzen, wobei das System Folgendes umfasst:

   einen Rahmen (210);
   einen mit dem genannten Rahmen (210) gekoppelten Antriebsmechanismus (220);
   mehrere Regalablagen (260), die mit dem genannten Antriebsmechanismus (220) gekoppelt sind, wobei jede

der genannten Regalablagen (260) wenigstens eine Pflanze tragen kann;
**dadurch gekennzeichnet, dass** der Antriebsmechanismus (220) ein Wasserantriebsrad (230) umfasst, das zum Drehen mit Wasser von einer Wasserquelle konfiguriert ist, um die genannten mehreren Regalablagen (260) zu drehen; und
wenigstens ein Wasserauslass (370) zum Zuführen von Wasser von der Wasserquelle zu wenigstens einer Pflanze bei deren Rotation vorgesehen ist.

**2.** System (100) nach Anspruch 1, wobei die genannten Regalablagen (260) bei der Rotation der genannten Regalablagen (260) in einer im Wesentlichen horizontalen Orientierung gehalten werden.

**3.** System (100) nach Anspruch 1 oder 2, wobei der Antriebsmechanismus (220) ferner Folgendes umfasst:

eine erste Mehrzahl von Zahnrädern (244, 246, 248b), die mit einer Seite des genannten Rahmens (210) gekoppelt sind, wobei die genannte erste Mehrzahl von Zahnrädern (244, 246, 248b) zum Aufnehmen und Antreiben eines ersten Antriebselements (222) konfiguriert ist;
eine zweite Mehrzahl von Zahnrädern, die mit einer gegenüberliegenden Seite des genannten Rahmens (210) gekoppelt ist, wobei die genannte zweite Mehrzahl von Zahnrädern zum Aufnehmen und Antreiben eines zweiten Antriebselements konfiguriert ist; und
wobei der Wasserradantrieb (230) zum Antreiben von wenigstens einem der genannten Zahnräder mit Wasserkraft konfiguriert ist;
wobei jede aus der genannten Mehrzahl von Regalablagen (260) mit dem genannten ersten und zweiten Antriebselement gekoppelt ist.

**4.** System (100) nach Anspruch 3, wobei das genannte erste und zweite Antriebselement erste und zweite Rollenketten (222) umfassen.

**5.** System (100) nach einem der vorherigen Ansprüche, das ferner Folgendes umfasst:

ein Hauptwasserrad (310), das zum Antreiben durch fließendes Wasser von einer externen Quelle positioniert ist;
einen Stromgenerator (330), der durch die Drehung des genannten Hauptwasserrades (310) gespeist wird; und
eine Wasserpumpe (340), die elektrisch mit dem genannten Stromgenerator verbunden ist, wobei die genannte Wasserpumpe zum Pumpen von Wasser in einen erhöhten Tank (350) konfiguriert ist, wobei der erhöhte Tank (350) als Wasserquelle zum Bewässern der genannten Pflanzen dient.

**6.** System (100) nach Anspruch 5, wobei der genannte erhöhte Tank (350) eine Wasserquelle zum Antreiben des genannten Wasserantriebsrads (230) und zum Bewässern der genannten Pflanzen bereitstellt.

**7.** System (100) nach einem der vorherigen Ansprüche, wobei der genannte Antriebsmechanismus (220) zum Drehen der genannten Ablagen (260) mit einer gewünschten Geschwindigkeit konfiguriert ist.

**8.** System (100) nach einem der vorherigen Ansprüche, das ferner Mittel zum automatischen Bewässern der genannten Pflanzen während der Rotation der genannten Pflanzen umfasst.

**9.** System (100) nach einem der Ansprüche 4 bis 8, wobei wenigstens eine Kettenführung (218) mit dem Rahmen (210) über einen oder mehrere Stützquerstäbe (214) verbunden werden kann, um die Rollenkette (222) und die Regalablagen (260) zu tragen.

**10.** System (100) nach einem der Ansprüche 5 bis 9, wobei der erhöhte Tank (350) ein erstes Auslassrohr (360) umfasst, das zum Führen von Wasser zu dem Wasserantriebsrad (230) konfiguriert und geführt ist; und ein Rückflussrohr (362) zum Sammeln von Wasser, wenn das Wasser durch das Wasserantriebsrad (230) passiert ist und es gedreht hat.

**11.** System (100) nach Anspruch 10, wobei das Rückflussrohr (362) mit einem zweiten Auslassrohr (364) verbunden ist, wobei sich das zweite Auslassrohr (364) von dem erhöhten Tank (350) erstreckt und über dem Hauptwasserrad (310) positioniert ist.

**12.** System (100) nach einem der vorherigen Ansprüche, wobei das System von einem Computer (700) bedient werden kann, um die Drehgeschwindigkeit der Regalablagen und die Menge an Wasser zu regulieren, die den gezüchteten

Pflanzen zugeführt wird.

13. Verfahren zum Züchten von Pflanzen, wobei das Verfahren die folgenden Schritte beinhaltet:

Bereitstellen eines rotierenden vertikalen Regalsystems (100) zum Züchten von Pflanzen, wobei das System Folgendes umfasst:

Bereitstellen eines Rahmens (210);
Bereitstellen eines mit dem genannten Rahmen (210) gekoppelten Antriebsmechanismus (220);
Bereitstellen einer Mehrzahl von Regalablagen (260), die mit dem genannten Antriebsmechanismus (220) gekoppelt sind, wobei jede der genannten Regalablagen (260) wenigstens eine Pflanze tragen kann; **dadurch gekennzeichnet, dass**:

der genannte Antriebsmechanismus (220) ein Wasserantriebsrad (230) umfasst, das zum Drehen mit Wasser von einer Wasserquelle konfiguriert ist, um die genannte Mehrzahl von Regalablagen (260) zu drehen; und
Bereitstellen von wenigstens einem Wasserauslass (370) zum Zuführen von Wasser von der Wasserquelle zu der wenigstens einen Pflanze bei deren Rotation.

14. Verfahren nach Anspruch 13, das ferner die folgenden Schritte beinhaltet:

Bereitstellen eines Hauptwasserrades (310), das zum Antreiben durch fließendes Wasser von einer externen Quelle positioniert ist;
Bereitstellen eines Stromgenerators (330), der durch die Drehung des genannten Hauptwasserrades (310) gespeist wird; und
Bereitstellen einer Wasserpumpe (340), die mit dem genannten Stromgenerator (330) elektrisch verbunden ist und Wasser mittels genannten Wasserpumpe (340) in einen erhöhten Tank (350) pumpt, wobei der erhöhte Tank (350) als Wasserquelle zum Bewässern der genannten Pflanzen dient und wobei der genannte erhöhte Tank (350) eine Wasserquelle zum Antreiben des genannten Wasserantriebsrades (230) und zum Bewässern der genannten Pflanzen bereitstellt.

## Revendications

1. Système de rayonnage vertical rotatif (100) pour cultiver des plantes, le système comprenant :

un châssis (210) ;
un mécanisme d'entraînement (220) couplé audit châssis (210) ;
un pluralité de plateaux de rayonnage (260) couplés audit mécanisme d'entraînement (220), chacun desdits plateaux de rayonnage (260) étant capable de supporter au moins une plante ;
**caractérisé en ce que** le mécanisme d'entraînement (220) comprend une roue d'entraînement hydraulique (230) configurée pour être tournée par l'eau d'une source d'eau de manière à faire tourner ladite pluralité de plateaux de rayonnage (260) ; et
au moins une arrivée d'eau (370) est fournie pour fournir de l'eau de la source d'eau à la au moins une plante au fur et à mesure qu'elles tournent.

2. Système (100) selon la revendication 1, dans lequel lesdits plateaux de rayonnage (260) sont maintenus dans une orientation sensiblement horizontale au fur et à mesure que lesdits plateaux de rayonnage (260) tournent.

3. Système (100) selon la revendication 1 ou 2, dans lequel le mécanisme d'entraînement (220) comprend en outre :

une première pluralité de dents de pignon (244, 246, 248b) couplées à un côté dudit châssis (210), ladite pluralité de dents de pignon (244, 246, 248b) configurées pour recevoir et entraîner un premier élément d'entraînement (222) ;
une deuxième pluralité de dents de pignon couplées à un côté opposé dudit châssis (210), ladite deuxième pluralité de dents de pignon configurées pour recevoir et entraîner un deuxième élément d'entraînement ; et
la roue d'entraînement hydraulique (230) configurée pour entraîner au moins l'une desdites dents de pignon en utilisant de l'énergie hydraulique ;

où chacun de ladite pluralité de plateaux de rayonnage (260) est couplé auxdits premier et deuxième éléments d'entraînement.

4. Système (100) selon la revendication 3, dans lequel lesdits premier et deuxième éléments d'entraînement comprennent une première et une deuxième chaîne à rouleaux (222).

5. Système (100) selon l'une quelconque des revendications précédentes, comprenant en outre :-
une roue hydraulique principale (310) positionnée de manière à être actionnée par de l'eau coulant d'une source extérieure ;
un générateur électrique (330) actionné par la rotation de ladite roue hydraulique principale (310) ; et
une pompe à eau (340) raccordée électriquement audit générateur électrique, ladite pompe à eau configurée pour pomper de l'eau dans un réservoir surélevé (350), le réservoir surélevé (350) actionnable pour fournir une source d'eau pour arroser lesdites plantes.

6. Système (100) selon la revendication 5, dans lequel ledit réservoir surélevé (350) fournit une source d'eau pour entraîner ladite roue d'entraînement hydraulique (230) et pour arroser lesdites plantes.

7. Système (100) selon l'une quelconque des revendications précédentes, dans lequel ledit mécanisme d'entraînement (220) est configuré pour faire tourner lesdits plateaux (260) à une vitesse désirée.

8. Système (100) selon l'une quelconque des revendications précédentes, comprenant en outre un moyen pour arroser automatiquement lesdites plantes pendant que lesdites plantes tournent.

9. Système (100) selon l'une quelconque des revendications 4 à 8, dans lequel au moins un guide de chaîne (218) peut être raccordé au châssis (210) par une ou plusieurs traverses de support (214) afin de fournir un support à la chaîne à rouleaux (222) et aux plateaux de rayonnage (260).

10. Système (100) selon l'une quelconque des revendications 5 à 9, dans lequel le réservoir surélevé (350) comprend un premier tuyau d'arrivée (360) configuré et acheminé pour fournir de l'eau à la roue d'entraînement hydraulique (230) ;
et un tuyau d'écoulement de retour (362) pour recueillir l'eau une fois que l'eau est passée à travers et a fait tourner la roue d'entraînement hydraulique (230).

11. Système (100) selon la revendication 10, dans lequel le tuyau d'écoulement de retour (362) est raccordé à un deuxième tuyau d'arrivée (364), le deuxième tuyau d'arrivée (364) s'étendant du réservoir surélevé (350) et étant positionné au-dessus de la roue d'entraînement hydraulique (310).

12. Système (100) selon l'une quelconque des revendications précédentes, où le système est actionnable à distance par un ordinateur (700) pour contrôler la vitesse de rotation des plateaux de rayonnage et la quantité d'eau fournie aux plantes en cours de culture.

13. Procédé de culture de plantes, le procédé comprenant les étapes consistant à :

fournir un système de rayonnage vertical rotatif (100) pour cultiver des plantes, le système comprenant :

fournir un châssis (210) ;
fournir un mécanisme d'entraînement (220) couplé audit châssis (210) ;
fournir une pluralité de plateaux de rayonnage (260) couplés audit mécanisme d'entraînement (220), chacun desdits plateaux de rayonnage (260) étant capable de supporter au moins une plante ;
**caractérisé en ce que** :

ledit mécanisme d'entraînement (220) comprend une roue d'entraînement hydraulique (230) configurée pour être tournée par de l'eau d'une source d'eau de manière à faire tourner la pluralité de plateaux de rayonnage (260) ; et
fournir au moins une arrivée d'eau (370) pour fournir de l'eau de la source d'eau à la au moins une plante au fur et à mesure qu'elles tournent.

14. Procédé selon la revendication 13, comprenant en outre les étapes consistant à :

fournir une roue hydraulique principale (310) positionnée pour être actionnée par de l'eau coulant d'une source d'eau extérieure;
fournir un générateur électrique (330) actionné par la rotation de ladite roue hydraulique principale (310) ; et
fournir une pompe à eau (340) raccordée électriquement audit générateur électrique (330) et pomper de l'eau dans un réservoir surélevé (350) en utilisant ladite pompe à eau (340), le réservoir surélevé (350) étant actionnable pour fournir une source d'eau pour arroser lesdites plantes et où ledit réservoir surélevé (350) fournit une source d'eau pour entraîner ladite roue d'entraînement hydraulique (230) et pour arroser lesdites plantes.

Figure 1

Figure 2

Figure 3

Figure 4

Figure 5

Figure 6

Figure 7

EP 2 600 708 B1

EP 2 600 708 B1

Figure 8

Figure 8a

Figure 9

**EP 2 600 708 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2366981 A